(19) Europäisches Patentamt / European Patent Office / Office européen des brevets

(11) EP 2 771 258 B1

(12) **EUROPEAN PATENT SPECIFICATION**

(45) Date of publication and mention
of the grant of the patent:
**13.07.2016 Bulletin 2016/28**

(51) Int Cl.:
**B65D 85/804** (2006.01)   **A47J 31/22** (2006.01)

(21) Application number: **12775688.0**

(22) Date of filing: **23.10.2012**

(86) International application number:
**PCT/EP2012/070906**

(87) International publication number:
**WO 2013/060656 (02.05.2013 Gazette 2013/18)**

(54) **MODULAR CAPSULE KIT WITH VARIABLE VOLUME**

MODULARER KAPSELSATZ MIT VARIABLEM VOLUMEN

KIT DE CAPSULE MODULAIRE AVEC VOLUME VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2011 EP 11186328**

(43) Date of publication of application:
**03.09.2014 Bulletin 2014/36**

(73) Proprietor: **Nestec S.A.**
**1800 Vevey (CH)**

(72) Inventors:
• **PERENTES, Alexandre**
**CH-1012 Lausanne (CH)**
• **ABEGGLEN, Daniel**
**CH-1439 Rances (CH)**
• **GERBAULET, Arnaud**
**F-25160 Oye et Pallet (FR)**
• **TINEMBART, Jean-François**
**CH-1400 Yverdon (CH)**
• **BIZET, Bruno**
**F-71260 Montbellet (FR)**
• **BEZET, Nicolas, Jean-Guy**
**F-7100 Macon (FR)**

(74) Representative: **Borne, Patrice Daniel**
**Nestec S.A.**
**CT-IAM**
**Avenue Nestlé 55**
**1800 Vevey (CH)**

(56) References cited:
**WO-A1-2011/069829     WO-A1-2011/092301**

**Description**

**Field of the invention**

The present invention relates to the field of beverage preparation from a beverage substance contained in a capsule by passing a liquid through the substance using centrifugal forces. In particular, the present invention relates to a capsule kit having an interface head and a connection portion which may be associated together for tailoring the constructional features of the capsule to the beverage ingredients and/or to the type of beverage to be prepared.

**Background of the invention**

Capsules containing beverage ingredients and designed for producing a beverage in a beverage preparation device upon liquid injection into the capsules and by rotating the capsules around a central axis in the device are known.

The principle consists in preparing a beverage by passing a liquid through beverage ingredients contained in the capsule using centrifugal forces. Thereby, liquid is usually injected in a central inlet area of the capsule before and/or during rotation of the capsule in order to make the liquid interact with the ingredients provided within the capsule, thereby forming a beverage such as coffee, ground coffee, tea or the like. The resulting beverage is then allowed to exit the capsule by means of at least one outlet aperture provided at a portion arranged radially outside of the central inlet area of the capsule.

A capsule for preparing a beverage or liquid food and a system using centrifugal forces is for example described in WO2008/148650. The capsule is formed of a rotational symmetric body containing a substance such as coffee powder, which is closed off by a lid member and a membrane. The ingredients compartment is thus enclosed by the outer body and the lid member of the capsule which are assembled during the manufacturing process of the capsule.

EP1440904A1 relates to a cartridge containing beverage ingredients and being formed from substantially air- and water-impermeable materials, the cartridge comprising an outer member defining a storage chamber for the beverage ingredients, an inner member having a discharge spout forming an outlet for outflow of beverage formed from the beverage ingredients, and a filter disposed between the storage chamber and the discharge spout, wherein the inner member and filter are conjoined in one operation to the outer member by means of at least one weld during the manufacturing process of the capsule.

WO2011/069829A1 relates to a capsule system for preparing beverages by centrifugation using capsules of different volumes but a same insertion diameter. The body of each respective capsule has a single convex portion of variable depth. The body made of rigid or semi-rigid material is closed by a membrane or rigid or semi-rigid lid member sealed to the rim of the body.

WO2011/092301A1 also relates to a capsule system for preparing beverages by centrifugation using capsules of different volumes but a same insertion diameter.

The known prior art capsule is not adapted for use in a centrifugal beverage preparation device in view of the position of the discharge spout. The prior art capsule also suffers the drawback that although the amount of the beverage ingredients may be varied, e.g. during the manufacturing process of the capsule, the constructional features of the capsule such as for example the volume of the ingredients compartment remains essentially constant.

Therefore, a capsule is sought-after, more particularly for use in a centrifugal beverage preparation device, which enables the adjustment respectively the tailoring of the constructional features such as the volume of the ingredients compartment to the type of beverage ingredients provided within the capsule respectively to the type of beverage to be prepared by injection of liquid into the capsule.

In addition, there is a need for being able to provide beverages such as coffee having different characteristics as for example intensity, taste, aroma, foam or crema in a kit or system that is simple and versatile.

The present invention seeks to address the above-described problems. The invention also aims at other objects and particularly the solution of other problems as will appear in the rest of the present description.

**Object and summary of the invention**

The invention proposes a modular capsule kit according to claim 1.

The invention relates both to unfilled capsules, designed for being filled one or more ingredients, as well as to filled capsules, having one or more ingredient inside the ingredient compartment.

In a preferred embodiment, the capsule types with ingredient compartments of differing volume contain ingredients that differ in at least one physical or organoleptic parameter, preferably for different types of coffee, such as for example ristretto, espresso, lungo, doppio, Americano, Long black or long cup. Thereby, the ingredients may differ in amount of the substance, density of the substance, specific composition (e.g., blend, coffee origins), roasting levels, granulometry and combinations thereof.

Accordingly, the volume of the particular capsule type and thus, the residence time of hot liquid in contact with the beverage ingredients during beverage preparation can be tailored to the specific beverage type or coffee type to be prepared.

In a preferred mode, the interface heads may be connected to the respective bottom closures during an industrial manufacturing respectively filling process of the capsules.

According to the invention, all the technology of the capsule necessary for a successful interaction of the capsule and the beverage preparation device is integrally formed with the interface head which can be associated to different bottom portions in order to form the capsule of varying volume.

It is to be noted that the interface head and the respective bottom closure of the kit may as well be designed for being mechanically associated by the consumer, preferably without using tools.

The term "without using tools" means that the user may associate the interface head and the bottom closure of the kit essentially without the necessary help of any additional means which are to be provided to the kit such as a mechanical press or the like.

The capsule interface heads and/or the bottom closures preferably comprise connection means designed for selectively connecting and/or disconnecting the interface head to the bottom closure of the capsule kit. Thereby, the connections means may be any mechanical means for connecting the bottom closure to the interface head of the capsule kit such as for example a plug connection.

In a preferred embodiment, the volumes of the ingredient compartment of the at least two capsule types in the kit differ by at least 5%, preferably by at least 20%, more preferably by at least 50%. This percentage is calculated as follows:

$$Percentage = (Volume_{CapsuleLarge} - Volume_{CapsuleSmall})/Volume_{CapsuleSmall}$$

The volumes of the ingredient compartment of the capsule types of the kit are preferably designed to be variable by means of the geometrical shape of the bottom closures connected to the respective interface head and/or the relative position of the bottom closures with respect to the transversal wall of the respective interface head.

In a preferred mode, the bottom closure is a rigid cup-shaped body having a predefined depth D. Thereby, depth D is preferably between 10 and 40mm, more preferably between 15 and 35mm. The depth D is preferably measured from the transversal wall of the interface head to an inner surface of a bottom portion of the bottom closure being arranged essentially parallel to the transversal wall.

Thereby, the shorter the amount of beverage to be prepared respectively the smaller the amount of beverage substance to be contained within the capsule, the shorter is preferably the depth D of the cup-shaped body.

In an embodiment which is not part of the invention, the capsule kit comprises at least two bottom closures of varying depth D that are designed to be selectively connected to the interface head.

In the mode of the invention, the bottom closure of the capsule kit is formed of a disc-shaped closure wall designed to be connected to a tubular connection portion of the interface head. Thereby, the disc-shaped closure wall is preferably arranged within the tubular connection portion in parallel to the transversal wall of the interface head.

In a possible alternative, the disc-shaped closure wall may as well be of convex or concave shape having an annular rim portion suitable for being connected to the tubular connection portion of the interface head.

The bottom closure may as well be designed to be movably arranged with respect to the transversal wall of the interface head. Thereby, the bottom closure is preferably slidably supported within the tubular connection portion of the interface head. Accordingly, the volume enclosed by the interface head and the bottom closure may be optimally adjusted to the amount of beverage ingredients provided within the compartment.

In another preferred embodiment, the bottom closure of the capsule kit is sealed to the tubular connection portion at a predefined depth D' with respect to the transversal wall of the interface head, wherein depth D' preferably differs for the at least two capsule types of the kit.

The bottom closure according to the invention may be made of any rigid or flexible material. Moreover, the bottom closure may be made of a metal such as e.g. aluminum, plastic, a biodegradable material or any (e.g. sandwiched) combinations thereof.

According to a preferred embodiment, the bottom closure is made of a thin membrane or film sealed to the interface head.

The interface head according to the invention is preferably made of a rigid material. Preferably, the interface head is one integral piece formed of aluminum, plastic or a biodegradable material.

In another preferred embodiment, the materials of the interface head and the respective bottom closure preferably differ. Thereby, the material can be tailored to meet the specific requirements of the individual parts.

The liquid inlet formed in the transversal wall is preferably an openable or perforable portion of the wall designed to be opened by the liquid outlet probe of the beverage preparation device.

The outlet openings are preferably arranged in a peripheral portion of the transversal wall, between the liquid inlet and the flange-like rim portion of the interface head in order to enable the ejection of beverage from the capsule during centrifugation thereof. Thereby, the diameter of the outlet openings is preferably designed to retain any beverage ingredients within the ingredients compartment from exiting the capsule during centrifugation thereof.

The flange-like rim portion of the interface head preferably protrudes in a plane perpendicular to a rotational axis of the capsule.

The interface head according to the invention further comprises an annular force ring designed for being engaged by a dedicated engagement member of the beverage preparation device in order to form, in cooperation with the beverage preparation device, a restriction valve means for the centrifuged liquid exiting the capsule. Thereby, the force ring is preferably integrally formed with the flange-like rim portion of the interface head. Preferably, the force ring protrudes from the flange-like rim portion in a direction parallel to a rotational axis of the capsule.

In a preferred embodiment, the interface head is identical for the at least two capsule types of the kit. Thereby, in particular, the geometry of the force rings of the respective interface heads is identical. Hence, varying volumes of the ingredients compartment can be provided without the necessity of adapting the interface head to the beverage type to be prepared.

In another preferred embodiment, the geometry of the force ring differs in the capsule kit for the at least two capsule types. Hence, the back-pressure of a restriction valve formed by means of the force ring and the engagement means of the beverage preparation device may be adapted for each capsule type in the set.

The term "geometry" is to be understood as the specific shape and/or specific dimension(s) of the force ring.

The term "back-pressure of the valve means" refers to the pressure loss created by the restriction or restriction valve formed. As the restriction or restriction valve form a "bottleneck effect", a pressure of liquid is created upstream of it by the effect of the centrifugation.

Due to a specific geometry of the force ring of the interface head, an adaptation of the back-pressure of the restriction valve formed with a dedicated engagement means of the beverage preparation device is obtained.

For example, for capsule types having a relatively smaller volume of the ingredients compartment, such as e.g. capsules containing ristretto or espresso type ingredients, a thicker and denser crema is desired which can be obtained by a relative higher back-pressure compared to large-volume capsules respectively capsules which contain a larger amount of coffee powder and from which larger coffee beverages are to be prepared such as capsules containing lungo or Americano type ingredients.

Moreover, in order to optimize extraction, a relative lower flow rate for a smaller coffee, e.g., ristretto coffee, may be desired than for a larger coffee, e.g., lungo, Americano, etc. Accordingly, for capsules comprising a relatively larger volume of the ingredients compartment, the back-pressure can be adjusted to a relative lower value in order to increase the flow rate of the beverage from the capsule compared to a capsule containing a relative lower volume of beverage substance.

Hence, in a preferred embodiment, the height of the force ring of the respective interface head of the capsule kit varies as a function of the type of beverage ingredients contained in the capsule and/or the volume of the ingredients compartment in the capsule. Thereby, the height of the force ring of the interface head preferably increases when the amount of coffee powder decreases in the capsule and/or the volume of the ingredients compartment of the capsule type decreases.

In another aspect, the invention proposes a beverage preparation system comprising a modular capsule kit according to the invention and a beverage preparation device comprising a liquid injections means for supplying liquid to the capsule and a rotary engagement member designed for interacting with the interface head of the capsule. Thereby, the rotary engagement member preferably comprises engagement means that interact with the force ring of the interface head of the capsule in order to form a restriction valve during the beverage preparation process.

The capsule according to the present invention can comprise a substance that is extractable, such as ground coffee or a soluble or dispersible substance in liquid, such as milk or soup powder. In particular the substance can be chosen amongst ground coffee, instant coffee, chocolate, cocoa powder, leaf tea, instant tea, herbal tea, a creamer/whitener, a nutritional composition (e.g., infant formula, growing-up milk powder, gums), dehydrated fruit or plant, culinary powder and combinations thereof.

The capsule types of the kit may include a gas with the food ingredients such as nitrogen and/or carbon dioxide. Thereby, the capsule preferably comprises gas barrier materials enveloping the ingredients' compartment. However, in case the capsule is not gastight 'per se', an outer package may be used to pack the capsule individually or in group of several capsules. In this case, the package is removed before the capsule is inserted in the beverage preparation device.

**Brief description of the drawings**

Further features, advantages and objects of the present invention will become apparent for a skilled person when reading the following detailed description of embodiments of the present invention, when taken in conjunction with the figures of the enclosed drawings.

Fig. 1          shows a perspective sectional side view of a capsule type according to an embodiment which is not part of the present invention.

Fig. 2a to 2c   show sectional side views of different capsule types of the capsule kit according to the embodiment of figure 1.

Fig. 3a         and 3b show sectional side views of different capsule types of the capsule kit according to the preferred embodiment of the invention.

Fig. 4a         shows a sectional side view of a capsule type according to the embodiment of figures 1 and 2a to 2c being inserted in receiving means of a dedicated beverage preparation device.

Fig. 4b         shows the arrangement of figure 4a, wherein the capsule is engaged by engagement means of the beverage preparation device.

Fig. 5          shows a sectional side view of a capsule type according to figures 3a and 3b being inserted in receiving means of a beverage preparation device.

## Detailed description of the figures

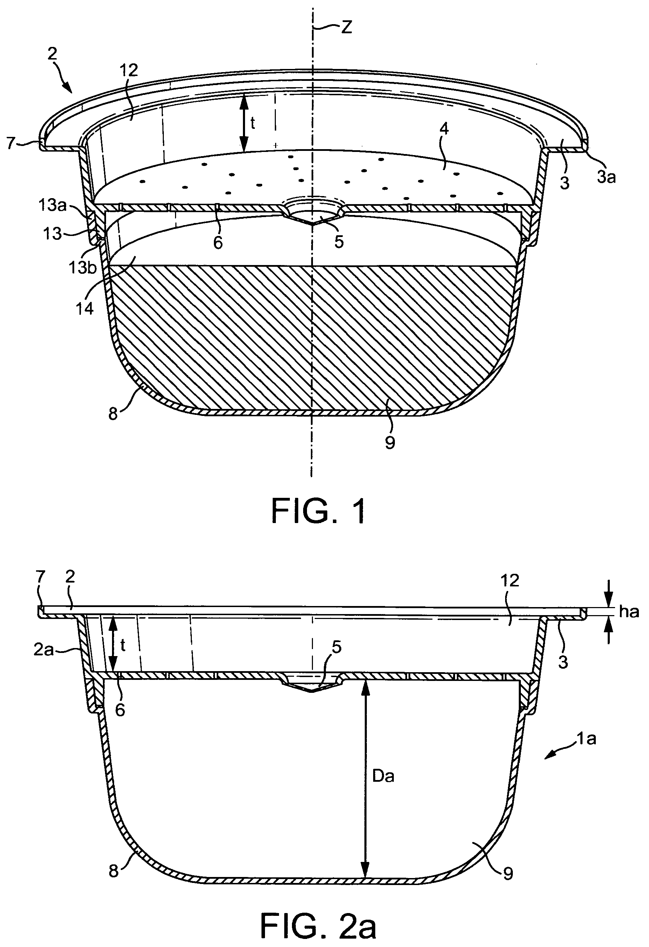

Figure 1 shows a perspective sectional side view of a capsule type 1 according to an embodiment which is not part of the present invention.

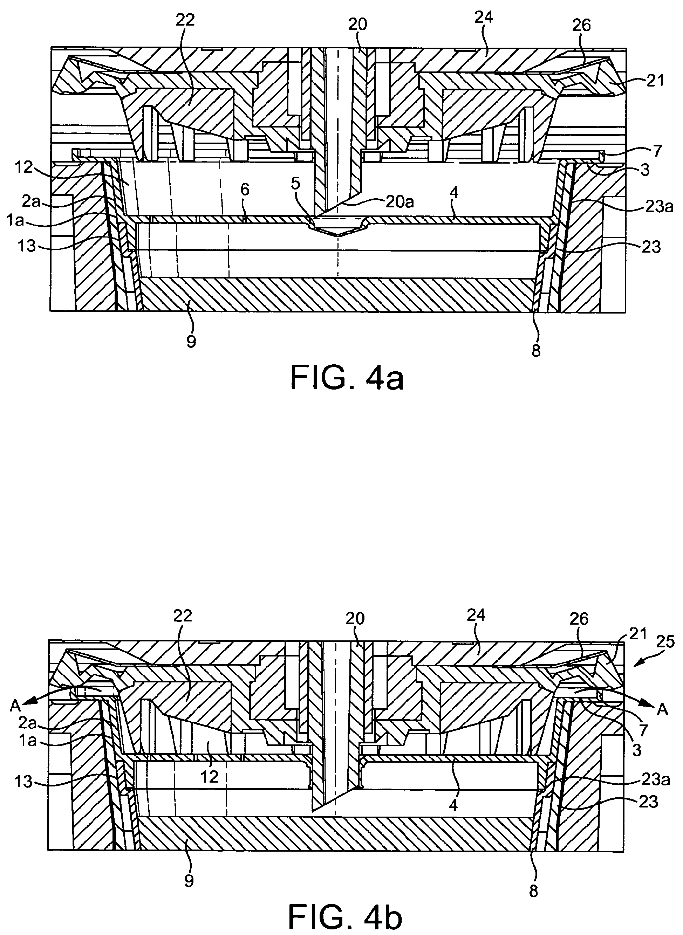

The capsule 1 comprises a rotational-symmetric interface head 2 comprising a transversal wall 4 which forms a recess 12 in which e.g. surrounding support members 22 of the liquid injection member 20 (see figures 4a,4b) of the beverage preparation device may be accommodated during the beverage preparation.

The transversal wall 4 is preferably essentially disc-shaped and arranged perpendicular to the rotational axis Z of the capsule 1. Thereby, the rotational axis Z represents the axis of rotation during centrifugation of the capsule in the beverage preparation device.

The transversal wall 4 is preferably arranged at a depth t with respect to a flange-like rim 3 of the interface head 2. The flange-like rim 3 protrudes preferably perpendicular to the rotational axis Z from the interface head 4. The depth t lies preferably between 3 and 10 mm, more preferably between 4 and 8 mm, even more preferably between 5 and 6 mm.

The transversal wall 4 of the interface head 2 comprises a central liquid inlet 5 and peripheral outlet apertures 6 that are arranged between the inlet 5 and the flange-like rim portion 3.

The flange-like rim portion 3 comprises a force ring 7 which is protruding essentially perpendicular from the plane in which the rim 3 is arranged. Thereby the force ring 7 is preferably arranged at a radially outermost portion respectively circumferential edge 3a of the flange-like rim portion 3 as shown in figure 1. However, the force ring 7 may as well be provided at a different portion of the flange-like rim 3. In particular, the force ring 7 may protrude from an intermediate portion that is provided radially inwards from an outer circumferential edge 3a of the rim portion 3.

The capsule 1 further comprises connection means 13 which protrude from a lower surface of the transversal wall 4, i.e. at a face of the transversal wall 4 opposite to the formed recess 12. Thereby, the connection means 13 are tubular connection means which preferably comprise a stepped portion 13a as shown in figure 1.

To the connection means 13 of the interface head 2, a preferably rigid cup-shaped bottom closure 8 is connected. Thereby, the bottom closure 8 preferably comprises connection means 13b which interact with the provided stepped portion 13a of the interface head 2 in order to provide a liquid tight arrangement.

The bottom closure 8 is preferably sealed in liquid-tight manner to the interface head 2, e.g. by means of a sealing substance such as glue or a weld.

When being connected to the interface head 2, the bottom closure 8 and the interface head 2 enclose a beverage ingredients compartment 9. Thereby, the interface head 2 closes-off an opening 14 of the cup-shaped body 8 through which beverage ingredients may be provided into body 8.

Figures 2a to 2c relate to different capsule types 1a,1b,1c of a modular capsule kit according to a preferred embodiment of the present invention, wherein the capsule types essentially correspond to the capsule type as explained with reference to figure 1.

As shown in figures 2a to 2c, the bottom closure 8 of the capsule types 1a,1b,1c comprises a single convex portion respectively cup-shaped body of variable depth D, respectively $D_a,D_b,D_c$. The different capsule types 1a,1b,1c of the capsule kit thus comprise ingredient compartment 9 of different volumes. It is to be understood that the bottom closure 8 may as well be of different geometrical shape such as an at least partially truncated or cylindrical shape for example.

Hence, the different capsule types 1 a, 1 b, 1 c of the kit comprise different volumes of the respective ingredient compartment 9. Thereby the volumes preferably differ in at least 5%, preferably 20% and even more preferably 50%.

The depth D, respectively $D_a, D_b, D_c$ lies preferably between 10 and 45mm, more preferably between 12 and 40mm.

An outer engagement portion 2a of the interface head 2 is designed to be engaged by a dedicated receiving means 23 of the beverage preparation device. Thereby, the outer engagement portion 2a is preferably of constant design for the different interface heads 2. In particular, the circumference respectively the outer diameter of the engagement portion 2a is constant for each of the interface heads 2 of the capsule types 1 a, 1 b, 1 c.

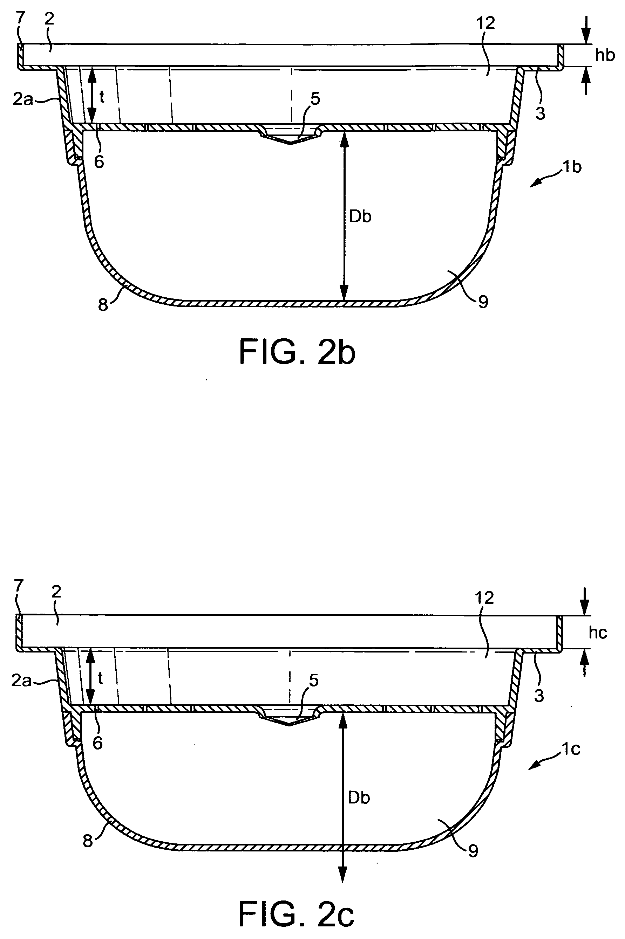

The capsule of figure 2a shows a large volume capsule type 1 a, whereas figures 2b and 2c show a smaller volume capsule type 1 b respectively 1 c. Thereby, the depth $D_a$ of the bottom closure 8 of the large volume capsule type 1 a is greater than the depth $D_b, D_c$ of the bottom closure 8 of the smaller capsule types 1 b, 1 c.

The small volume capsule type 1 c preferably contains an amount of extraction ingredient smaller than the amount for the large volume capsule type 1a, 1b. Hence, the small capsule type 1 c is intended for delivery of e.g. a short coffee of between 10 mL and 60 mL with an amount of ground coffee comprised preferably between 4 and 8 grams. The relatively larger capsule type 1 b is intended for delivery of a medium-size coffee, e.g., between 60 and 120 mL and the largest capsule type 1 a is intended for delivery of a long-size coffee, e.g., between 120 and 500 mL. Furthermore, the medium-size coffee capsule 1 b can contain an amount of ground coffee comprised preferably between 6 and 15 grams and the long-size coffee capsule 1a can contain an amount of ground coffee preferably between 8 and 30 grams.

According to a first preferred mode, the interface heads 2 of the respective capsule types 1a, 1b, 1c are preferably identical. In particular, the height h, respectively the height $h_a, h_b, h_c$ of the respective force rings 7 of the interface heads 2 are identical.

In another preferred mode, the interface heads 2 of the respective capsule types 1a, 1b, 1c vary at least with respect to the geometry of the provided force ring 7 of the interface head 2. Thereby, in particular the height $h_a, h_b, h_c$ to which the provided force ring 7 protrudes from the flange-like rim portion 3 is variable for the different capsule types 1a, 1b, 1c.

In such an embodiment of the modular capsule kit, the height $h_a, h_b, h_c$ of the force ring 7 is preferably adapted to the amount and/or characteristics of the beverage substance contained by the respective capsule types 1 a, 1 b, 1 c. In particular, the height h, respectively heights $h_a, h_b, h_c$ of the capsule types 1 a, 1 b, 1 c is preferably adapted to increase as a function of the volume of the ingredient compartments 9 and/or the amount of beverage substance contained within the respective capsule type. In particular, the height h, respectively heights $h_a, h_b, h_c$ of the capsule types 1 a, 1 b, 1 c preferably increases with the decrease of the volume of the ingredient compartments 9 and/or the amount of beverage substance contained within the respective capsule type.

For example, for smaller-size capsules as indicated by figure 2c, the height $h_a$ may be between 1.0 and 2.5 mm. For bigger-size capsule types as indicated by figures 1b and 1a, height $h_b$ respectively $h_a$ is preferably chosen to be between respectively 0.8 and 1.8 mm and between 0.5 and 1.5 mm. These values may however differ greatly depending on the configuration of the engagement means of the device.

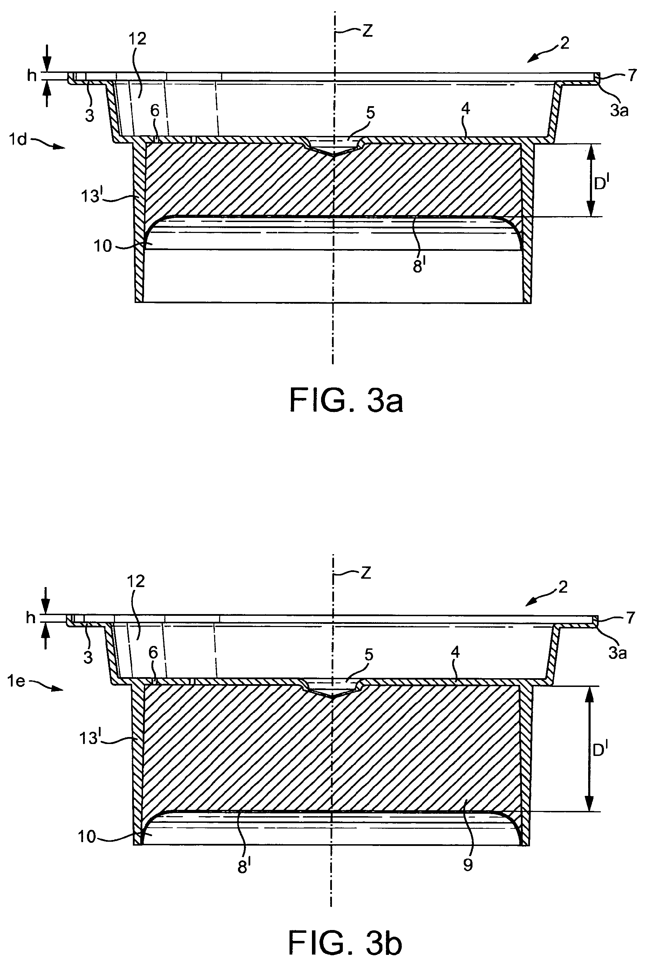

Figures 3a and 3b relate to a preferred embodiment of the capsule kit according to the present invention, the kit comprising two different capsule types 1 d and 1 e.

The interface head 2 according to said embodiment of the capsule kit essentially corresponds to the interface head 2 of the embodiment according to figures 2a to 2c. Thereby however, the tubular connection portion 13' protrudes from a face of the transversal wall 4 to a larger extent. Thereby, the tubular connection portion 13' forms a downwardly raising tubular portion of the liquid interface head 2.

The tubular connection portion 13' is thus shaped to form an outer circumferential wall of the ingredients compartment 9 when being connected to the bottom closure 8' of the capsule kit.

The bottom closure 8' according to said embodiment is preferably an essentially disc-shaped member designed for being circumferentially engaged by the tubular connection portion 13' in order to form the ingredients compartment 9 of the respective capsule.

The bottom closure 8' is preferably connected to the tubular connection portion 13' by means of a circumferential rim portion 10. Thereby, the rim portion 10 is preferably sealed or glued in liquid tight manner to the tubular connection portion 13'.

Depending on the height or depth respectively distance D' between the disc-shaped bottom closure 8' and the transversal wall 4, at which the bottom closure 8' is connected to the tubular connection portion 13' of the interface head 2, a varying volume of the ingredients compartment 9 is provided. Accordingly, figure 3a relates to a capsule type 1d having a smaller volume ingredients compartment than capsule type 1e of the modular capsule kit.

The force ring 7 of the respective interface heads 2 is preferably of identical geometry, in particular of equal height h for the shown capsule types 1d and 1 e of the capsule kit. However, the force ring 7 may as well be adapted to the volume of the ingredients compartment 9 respectively the amount of ingredients provided therein and/or the type of ingredients.

Figure 4a shows a sectional side view of a preferred embodiment of the capsule according to the present invention, wherein a capsule 1 a is placed within a dedicated receiving member 23 of a beverage preparation device.

The receiving member 23 is preferably designed in order to accommodate the capsule 1a therein. Accordingly, an inner recess 23a of the receiving member 23 is shaped to match the outer contours respectively the outer circumferential portion 2a of the interface head 2 of the capsule 1 a.

The receiving member 23 is preferably connected to drive means (not shown), e.g. an electric motor, of the beverage preparation device in order to enable a rotation of the receiving member 23 and thus a rotation of the capsule 1 a.

The beverage preparation device further comprises a rotary engagement member 24 and a liquid injection means 20 that are arranged at a liquid inlet side of the capsule 1 a. Thereby, the rotary engagement member 24 and the liquid injection means 20 are preferably relatively movable with respect to the rotary receiving member 23 in a direction parallel to the rotational axis Z of the capsule 1a. Accordingly, the capsule may first be placed within the receiving member 23 in an open state of the beverage preparation device and then, the rotary engagement member 24 and the liquid injection means 20 may be lowered onto the inlet side of the capsule 1 as shown in figure 4b.

The rotary engagement member 24 preferably comprises support means 22 provided at the circumference of the central injection member 20. Thereby, the support means 22 may contact the transversal wall 4 of the interface head 2 in order to prevent a deflection of the transversal wall 4 during beverage preparation. Instead of or in addition to the provided support means 22 on the device side, the interface head 2 of the capsule may comprise a support structure protruding from the upper surface of the transversal wall 4.

The rotary engagement member 24 further comprises engagement means 21 provided at an outer annular portion of the engagement member 24 and which are designed to engage with the force ring 7 of the interface head 2 in order to provide valve means 25 for liquid beverage exiting the capsule 1 a.

When the liquid injection means 20 and the rotary engagement member 24 are lowered into the recess 12 of the capsule 1 a, the liquid injection means 20 open the liquid inlet 5, e.g. by means of a dedicated perforation member 20a. The liquid injection means 20 are preferably connected to a liquid supply means, a pump and heating means of the beverage preparation device. Accordingly, the liquid injection means 20 are configured to provide heated and pressurized liquid such as water to the interior of the capsule 1a.

During beverage preparation, the valve means 25 normally close-off the flow path for the centrifuged liquid until a sufficient pressure is exerted on the upstream area of the valve by the centrifuged liquid exiting through the openings 6. The liquid then flows between the interface head 2 and the valve means 25 and forces the valve 25 to open by pushing the engagement means 21 upwards against the force of for example a spring-biasing element 26 provided in the device. The centrifuged liquid can thus transverse the restriction created between the force ring 7 and the engagement means 21. The height h of the force ring thus determines the opening pressure of the valve 25; in particular, the greater the height, the higher the opening pressure.

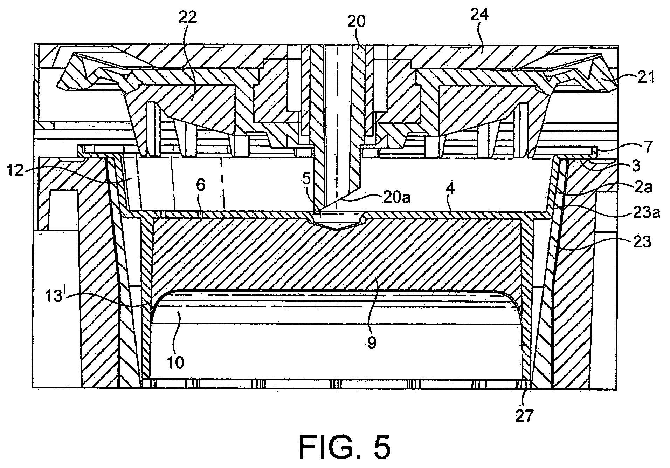

Figure 5 shows the embodiment of the capsule kit according to figures 3a and 3b.

A capsule type 1d,1e of the modular capsule kit is inserted in the receiving member 23 of the beverage preparation device. As explained with reference to figures 4a and 4b, the inner recess or wall 23a of the receiving member 23 is shaped in order to match the outer contours respectively the outer circumferential portion 2a of the interface head 2 of the capsule type 1d,1e of the kit.

In addition, the interface head 2 respectively the connection means 13' protruding from the interface head 2 may be supported by supporting means 27 arranged at a lower inner portion of the receiving member 23.

It is to be understood that in this embodiment, the distance D' at which the bottom closure 8' is arranged from the transversal wall 4 of the interface head 2 is preferably larger than the insertion depth of the injection member 20 of the beverage preparation device. It is thus prevented that the beverage injection member 20 pierces through the bottom closure 8'.

Although the present invention has been described with reference to preferred embodiments thereof, many modifications and alternations may be made by a person having ordinary skill in the art without departing from the scope of this invention which is defined by the appended claims.

**Claims**

1.  A modular capsule kit for preparing a beverage by centrifugation of a capsule in a centrifuging brewing device upon liquid injection into the capsule and by rotating the capsule about its central axis in the device, the kit comprising at least two capsule types (1d,1e) having:

- interface heads (2) comprising a flange-like rim portion (3) and a transversal wall (4) having a central liquid inlet (5) and peripheral outlet openings (6), and
- bottom closures (8,8') designed for being individually connected to the interface head (2) to enclose an ingredients compartment (9) of predefined volume,

wherein the volumes of the ingredient compartment(9) of the at least two capsules (1d,1e) differ as a result of the selection of the bottom closure and/or its particular connection to the interface head

**characterized in that**

the bottom closure is formed of a disc-shaped closure wall (8') designed to be connected to a tubular connection portion (13') of the interface head (2) <u>and</u> **in that**

the bottom closure (8') is sealed to the tubular connection portion (10) at a predefined depth D' with respect to the transversal wall (4) of the interface head (2), which depth D' preferably differs for the at least two capsule types (1d, 1e).

2. A modular capsule kit according to any of the preceding claims,
wherein the capsule types (1d,1e) with ingredient compartments (9) of differing volume contain ingredients which differ in at least one physical or organoleptic parameter, preferably for different types of coffee, such as e.g. ristretto, espresso, lungo, long cup.

3. A modular capsule kit according to claim 1 or 2,
wherein the volumes of the ingredient compartment(9) differ by at least 5%, preferably 20%, more preferably 50%.

4. A modular capsule kit according to any of the preceding claims,
wherein the interface heads (2) and the respective bottom closure (8,8') are designed for being mechanically associated by the consumer without using tools.

5. A modular capsule kit according to any of the preceding claims,
wherein the bottom closure (8, 8') is of flexible or rigid material.

6. A modular capsule kit according to any of the preceding claims,
wherein the respective interface head (2) is identical for the at least two capsule types (1d,1e) of the kit.

7. A modular capsule kit according to any of claims 1 to 6,
wherein the interface heads (2) of the kit differ in at least the geometry of the flange-like rim portion (3).

8. A modular capsule kit according to claim 7,
wherein the flange-like rim portion (3) of the interface head (2) comprises an annular force ring (7) designed for being engaged by dedicated engagement means (21) of the beverage preparation device in order to form, in cooperation with the beverage preparation device, a restriction valve (25) for the centrifuged liquid exiting the capsule (1d,1e), more preferably wherein the height (h) of the force ring (7) is specifically adapted to the provided volume of the ingredients compartment (9) of the respective capsule type (1d,1e) and/or the type of ingredients provided within the compartment (9).

9. A beverage preparation system comprising a modular capsule kit according to any of the preceding claims and a beverage preparation device comprising a liquid injections means (20) for supplying liquid to the capsule (1d,1e) and engagement means (21) designed for interacting with a force ring (7) of the interface head (4) of the capsule for forming a restriction valve (25) for the centrifuged liquid exiting the capsule.

**Patentansprüche**

1. Modulares Kapselkit zum Zubereiten eines Getränks durch Zentrifugieren einer Kapsel in einer zentrifugierenden Brühvorrichtung bei Einspritzung von Flüssigkeit in die Kapsel und durch Rotieren der Kapsel um ihre Mittelachse in dem Gerät, wobei das Kit mindestens zwei Kapseltypen (1d,1e) umfasst, die Folgendes aufweisen:

- Schnittstellenköpfe (2), umfassend einen flanschartigen Randabschnitt (3) und eine Querwand (4) mit einem zentralen Flüssigkeitseinlass (5) und peripheren Austrittsöffnungen (6), und
- Bodenverschlüsse (8,8'), die ausgelegt sind, um mit dem Schnittstellenkopf (2) einzeln verbunden zu werden, um eine Zutatenkammer (9) eines vorgegebenen Volumens zu umschließen,

wobei die Volumina der Zutatenkammer (9) der mindestens zwei Kapseln (1d,1e) sich als ein Ergebnis der Auswahl des Bodenverschlusses und/oder seiner jeweiligen Verbindung mit dem Schnittstellenkopf unterscheiden,

**dadurch gekennzeichnet, dass**

der Bodenverschluss aus einer scheibenförmigen Verschlusswand (8') gebildet ist, die ausgelegt ist, um mit einem rohrförmigen Verbindungsabschnitt (13') des Schnittstellenkopfs (2) verbunden zu werden **und dadurch, dass**

der Bodenverschluss (8') mit dem rohrförmigen Verbindungsabschnitt (10) in einer vordefinierten Tiefe D' in Bezug auf die Querwand (4) des Schnittstellenkopfs (2) versiegelt ist, wobei sich die Tiefe D' vorzugsweise für die mindestens zwei Kapseltypen (1d,1e) unterscheidet.

2. Modulares Kapselkit gemäß einem der vorangehenden Ansprüche,
wobei die Kapseltypen (1d,1e) mit Zutatenkammern (9) unterschiedlicher Volumina Zutaten enthalten, die sich in mindestens einem physikalischen oder organoleptischen Parameter unterscheiden, vorzugsweise für unterschiedliche Kaffeetypen, wie zum Beispiel Ristretto, Espresso, Lungo, lange Tasse.

3. Modulares Kapselkit gemäß Anspruch 1 oder 2,
wobei sich die Volumina der Zutatenkammer (9) um mindestens 5 %, vorzugsweise 20 %, mehr bevorzugt 50 % unterscheiden.

4. Modulares Kapselkit gemäß einem der vorangehenden Ansprüche,
wobei die Schnittstellenköpfe (2) und der jeweilige Bodenverschluss (8,8') dafür ausgelegt sind, ohne Werkzeug durch den Verbraucher mechanisch verbunden zu werden.

5. Modulares Kapselkit gemäß einem der vorangehenden Ansprüche, wobei der Bodenverschluss (8, 8') aus flexiblem oder starrem Material ist.

6. Modulares Kapselkit gemäß einem der vorangehenden Ansprüche,
wobei der jeweilige Schnittstellenkopf (2) für die mindestens zwei Kapseltypen (1 d, 1 e) des Kits identisch ist.

7. Modulares Kapselkit gemäß einem der Ansprüche 1 bis 6,
wobei die Schnittstellenköpfe (2) des Kits sich in mindestens der Geometrie des flanschartigen Randabschnitts (3) unterscheiden.

8. Modulares Kapselkit gemäß Anspruch 7,
wobei der flanschartigen Randabschnitt (3) des Schnittstellenkopfs (2) einen ringförmigen Kraftring (7) umfasst, der zum Eingreifen durch dedizierte Eingriffsmittel (21) der Getränkezubereitungsvorrichtung ausgelegt ist, um zusammen mit der Getränkezubereitungsvorrichtung ein Drosselventil (25) für die zentrifugierte Flüssigkeit zu bilden, die die Kapsel (1d,1e) verlässt, mehr bevorzugt, wobei die Höhe (h) des Kraftrings (7) speziell dem bereitgestellten Volumen der Zutatenkammer (9) des jeweiligen Kapseltyps (1d,1e) und/oder der Art der in der Kammer (9) bereitgestellten Zutaten angepasst ist.

9. Getränkezubereitungssystem, umfassend ein modulares Kapselkit gemäß einem der vorangehenden Ansprüche und
Getränkezubereitungsvorrichtung, umfassend eine Flüssigkeitsinjektionseinrichtung (20) zum Zuführen von Flüssigkeit zu der Kapsel (1d,1e) und Eingriffsmittel (21), die zum Zusammenwirken mit einem Kraftring (7) des Schnittstellenkopfs (4) der Kapsel ausgelegt sind, um ein Drosselventil (25) für die zentrifugierte Flüssigkeit zu bilden, die aus der Kapsel austritt.

**Revendications**

1. Kit de capsule modulaire pour la préparation d'une boisson par centrifugation d'une capsule dans un appareil d'infusion par centrifugation après injection de liquide dans la capsule et mise en rotation de la capsule autour de son axe central dans l'appareil, le kit comprenant au moins deux types de capsule (1 d, 1e) comportant :

- des têtes d'interface (2) comprenant une partie rebord (3) de type bride et une paroi transversale (4) munie d'un orifice central d'admission (5) du liquide et d'ouvertures de sortie périphériques (6), et

- des éléments de fermeture inférieurs (8, 8') conçus pour se raccorder individuellement à la tête d'interface (2) pour renfermer un compartiment à ingrédients (9) de volume prédéfini,

dans lequel les volumes du compartiment à ingrédients (9) des au moins deux capsules (1 d, 1 e) diffèrent en fonction de l'élément de fermeture inférieur choisi et/ou de son raccordement particulier à la tête d'interface **caractérisé en ce que**

l'élément de fermeture inférieur est formé d'une paroi de fermeture (8') en forme de disque conçue pour être raccordée à une partie de raccordement tubulaire (13') de la tête d'interface (2) et **en ce que**

l'élément de fermeture inférieur (8') est scellé sur la partie de raccordement tubulaire (10) à une profondeur prédéterminée D' par rapport à la paroi transversale (4) de la tête d'interface (2), laquelle profondeur D' est de préférence différente pour les au moins deux types de capsule (1 d, 1 e).

2. Kit de capsule modulaire selon l'une quelconque des revendications précédentes,
dans lequel les types de capsule (1 d, 1 e) munis de compartiments à ingrédients (9) de volume différent contiennent des ingrédients qui diffèrent par au moins un paramètre physique ou organoleptique, de préférence pour différents types de café, comme par exemple ristretto, espresso, lungo, tasse longue.

3. Kit de capsule modulaire selon la revendication 1 ou 2,
dans lequel les volumes du compartiment à ingrédients (9) diffèrent d'au moins 5 %, de préférence de 20 %, plus préférablement de 50 %.

4. Kit de capsule modulaire selon l'une quelconque des revendications précédentes,
dans lequel les têtes d'interface (2) et les éléments de fermeture inférieurs respectifs (8, 8') sont conçus pour être associés mécaniquement par le consommateur sans utiliser d'outils.

5. Kit de capsule modulaire selon l'une quelconque des revendications précédentes,
dans lequel l'élément de fermeture inférieur (8, 8') est en matériau souple ou rigide.

6. Kit de capsule modulaire selon l'une quelconque des revendications précédentes,
dans lequel la tête d'interface respective (2) est identique pour les au moins deux types de capsule (1d, 1e) du kit.

7. Kit de capsule modulaire selon l'une quelconque des revendications 1 à 6,
dans lequel les têtes d'interface (2) du kit diffèrent par au moins la géométrie de la partie rebord (3) de type bride.

8. Kit de capsule modulaire selon la revendication 7,
dans lequel la partie rebord (3) de type bride de la tête d'interface (2) comprend un anneau de force annulaire (7) conçu pour être en prise par un moyen de mise en prise dédié (21) de l'appareil de préparation de boisson afin de former, en coopération avec l'appareil de préparation de boisson, une soupape de restriction (25) pour le liquide centrifugé sortant de la capsule (1 d, 1e), de préférence dans lequel la hauteur (h) de l'anneau de force (7) est spécifiquement adaptée au volume prévu du compartiment à ingrédients (9) du type de capsule respectif (1 d, 1e) et/ou du type des ingrédients prévu à l'intérieur du compartiment (9).

9. Système de préparation de boisson comprenant un kit de capsule modulaire selon l'une quelconque des revendications précédentes, et
un appareil de préparation de boisson comprenant un moyen d'injection de liquide (20) pour fournir du liquide à la capsule (1 d, 1e) et un moyen de mise en prise (21) conçu pour interagir avec un anneau de force (7) de la tête d'interface (4) de la capsule afin de former une soupape de restriction (25) pour le liquide centrifugé sortant de la capsule.

FIG. 1

FIG. 2a

FIG. 2b

FIG. 2c

FIG. 3a

FIG. 3b

FIG. 4a

FIG. 4b

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008148650 A
- EP 1440904 A1
- WO 2011069829 A1
- WO 2011092301 A1